# EUROPÄISCHE PATENTSCHRIFT

(11) **EP 3 960 551 B1**
(45) Veröffentlichungstag und Bekanntmachung des Hinweises auf die Patenterteilung: **01.11.2023**
(21) Anmeldenummer: 21201636.4
(22) Anmeldetag: 27.03.2020
(51) Int. Cl.: B60R 21/203, B60R 21/015, B62D 1/18

(54) **VORRICHTUNG ZUR ÜBERWACHUNG EINER LENKRADSTELLUNG EINES KRAFTFAHRZEUGS**
DEVICE FOR MONITORING A STEERING WHEEL POSITION OF A MOTOR VEHICLE
DISPOSITIF DE SURVEILLANCE D'UNE POSITION DU VOLANT D'UN VÉHICULE AUTOMOBILE

(30) Priorität: 25.05.2019 DE 102019003711
(43) Veröffentlichungstag der Anmeldung: 02.03.2022
(62) Teilanmeldung aus: 20166372.1
(73) Patentinhaber: MAN Truck & Bus SE, 80995 München (DE)
(72) Erfinder: Gerritzen, Ralph, 80995 München (DE); Mendler, Hardy, 80995 München (DE)
(74) Vertreter: v. Bezold & Partner Patentanwälte - PartG mbB

(56) Entgegenhaltungen:
- DE-A1- 19 925 209
- JP-A- H1 095 350
- JP-A- 2002 255 042
- US-A- 5 088 766
- US-A1- 2005 140 127

## Beschreibung

Die Erfindung betrifft eine Vorrichtung zur Überwachung einer Lenkradstellung eines Kraftfahrzeugs, vorzugsweise eines Nutzfahrzeugs.

Bekanntermaßen besitzen heute übliche Kraftfahrzeuge, insbesondere Personenkraftwagen (PKW), eine im Wesentlichen ortsfeste Lenksäule, an deren dem Fahrzeug-Innenraum zugewandten freien Ende ein Lenkrad angeordnet ist. Um dieses relativ zum Fahrer möglichst günstig positionieren zu können, kann die Neigung der Lenksäule ggf. in geringem Maße verändert werden. Ferner kann die innerhalb der Lenksäule geführte Lenkspindel in gewissem Umfang teleskopisch ausgeführt sein. Beim Verschwenken des Lenkrads wird dabei das quasi eine Ebene beschreibende Lenkrad um eine in dieser Ebene oder parallel zu dieser liegende Achse gedreht.

Im Gegensatz zum PKW ist es im Nutzfahrzeug oftmals möglich, das Lenkrad in einem vergleichsweise großen Bereich zu verstellen bzw. zu verschwenken. Es ist beispielsweise aus der Praxis bekannt, das Lenkrad von einer relativ senkrechten Stellung dem Fahrer zugewandt, wie es im PKW üblich ist, in eine fast horizontale Lage vom Fahrer weg zu bringen. Diese horizontale Lenkrad-Lage erleichtert das Ein- und Aussteigen oder dient als geeignete Schreibunterlage. In allen Lenkradpositionen kann ein Fahrbetrieb möglich sein.

Im Fahrbetrieb bietet jedoch die senkrechte Lage des Lenkrads bzw. Airbags den für den Airbagfall optimalen Personenschutz. Die horizontale Lage des Lenkrads ist für Pausen bzw. für den Stillstand des Kraftfahrzeugs gedacht, jedoch nicht für den Fall der Airbag-Auslösung optimal. Die Schutzwirkung beim Auslösen des Airbags ist in dieser Pausenlage nicht gegeben. Der Fahrer wird in diesem Fall nicht in den Sitz gedrückt, sondern kann von dem ausgelösten Airbag einen "Kinnhaken" bekommen. In diesem Fall können sogar schwere oder gar tödliche Verletzungen auftreten.

Das Dokument US 2005/140127 A1 offenbart ein System umfassend ein Insassenerfassungsmodul, ein Inflatorsteuermodul und ein Lenkradsteuermodul. Das Insassenerfassungsmodul ist ausgebildet, Eigenschaften eines Insassen in einem Sitz zu bestimmen, der einem Lenkrad zugewandt ist. Das Inflatorsteuermodul ist ausgebildet, den Gasstrom eines Inflators an einen Airbag im Lenkrad basierend auf den Insasseneigenschaften anzupassen. Das Lenkradsteuermodul ist ausgebildet, das Lenkrad basierend auf den Insasseneigenschaften und dem Gasdurchsatz des Inflators zu positionieren.

Das Dokument JP 2002 255042 A beschreibt ein Säulenantriebsmittel zum Vorwärts- und Rückwärtsbewegen der Lenksäule in Bezug auf den Fahrer. Das Dokument offenbart ferner ein Intervalldetektionsmittel zum Detektieren eines Intervalls zwischen dem Fahrer und dem Lenkrad sowie eines Intervalls zwischen dem Fahrer und dem Lenkrad basierend auf dem Detektionsergebnis der Intervalldetektionsmittel.

Das Dokument JP H10 95350 A offenbart ein Lenkrad, das ausgebildet ist, einen Neigungswinkel von einem normalen Gebrauchszustand nach oben zu verändern. Das Lenkrad ist auf einer unteren Oberflächenseite einer Lenksäule angeordnet. Ein Airbag ist ausgebildet, den Neigungswinkel des Lenkrads durch die Aufblas- und Entfaltungskraft des Sackkörpers nach oben zu verändert.

Das Dokument DE 199 25 209 A1 beschreibt eine Kraftfahrzeuglenkung mit einer ein Lenkrad mit einem Lenkrad-Airbag tragenden Lenksäule. Die Lenksäule ist an einem Fahrzeugaufbau abgestützt und diesem gegenüber nach Überwinden oder Lösen einer Arretierung mittels eines im Kollisionsfall aktivierten Stellelementes um eine im Wesentlichen quer zur Fahrzeuglängsachse verlaufende Schwenkachse schwenkbar.

Es ist daher eine Aufgabe der Erfindung, einen verbesserten Ansatz bereitzustellen, mit dem die vorstehend beschriebenen Probleme und Nachteile vermieden werden können. Die Aufgabe der Erfindung ist es insbesondere, eine Technik bereitzustellen, mit der auch bei verschwenkbaren Lenkrädern, die einen integrierten Airbag aufweisen, Gefahrensituationen vermieden oder zumindest reduziert werden können, in denen aufgrund einer ungünstigen Verschwenkstellung des Lenkrads kein zuverlässiger Fahrerschutz durch den ausgelösten Airbag möglich ist.

Diese Aufgabe wird durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird eine Vorrichtung zur Überwachung einer Lenkradstellung eines Kraftfahrzeugs, vorzugsweise eines Nutzfahrzeugs, bereitgestellt. Die Vorrichtung umfasst in an sich bekannter Weise ein Lenkrad mit integriertem Airbag, das zwischen einer ersten Stellung und einer zweiten Stellung verschwenkbar oder, anders ausgedrückt, verkippbar ist, wobei das Lenkrad in der ersten Stellung eine im Vergleich zur zweiten Stellung horizontalere Ausrichtung aufweist. Die Vorrichtung ist vorzugsweise um eine zu einer Lenksäule des Lenkrads senkrechte Achse verschwenkbar.

Anders ausgedrückt kann das Lenkrad im Wesentlichen um eine in Kraftfahrzeug-Querrichtung verlaufende und/oder horizontale Achse zwischen der ersten Stellung und der zweiten Stellung verschwenkbar, d. h. verkippbar, ausgeführt sein. Beim Verschwenken des Lenkrads kann dabei das quasi eine Ebene beschreibende Lenkrad, beispielsweise der Lenkradkranz, um eine in dieser Ebene oder parallel zu dieser liegende Achse gedreht werden.

Unter der in der ersten Stellung im Vergleich zur zweiten Stellung horizontaleren Ausrichtung des Lenkrads wird verstanden, dass ein Winkel, den das Lenkrad mit einer Horizontalebene bildet, in der ersten Stellung kleiner ist als in der zweiten Stellung. Anders ausgedrückt weist das Lenkrad in der zweiten Stellung eine vertikalere Ausrichtung als in der ersten Stellung auf und/oder weist das Lenkrad zu einem in normaler Fahrposition befindlichen Fahrer in der zweiten Stellung eine parallelere Ausrichtung zum Fahrer als in der ersten Stellung auf.

Die erste Stellung umfasst eine horizontale Ausrichtung des Lenkrads. Alternativ weist das Lenkrad in der ersten Stellung eine Ausrichtung auf, in der das Lenkrad mit einer Horizontalebene einen Winkel von kleiner 30 Grad, weiter vorzugsweise kleiner 20 Grad, aufweist. Hierbei können ein Fahrbetrieb und/oder ein Lenken des Kraftfahrzeugs sowohl in der ersten als auch in der zweiten Stellung und/oder im Bereich zwischen der ersten und zweiten Stellung möglich sein.

Vorstehend wurde bereits festgestellt, dass ein Lenkrad, das sich in der ersten Stellung befindet, keinen optimalen Schutz für den Fahrer für den Fall der Airbag-Auslösung bietet oder sogar für den Fahrer gefährlich sein kann.

Gemäß einem allgemeinen Gesichtspunkt der Erfindung werden die genannten Aufgaben dadurch gelöst, dass die Vorrichtung zur Überwachung einer Lenkradstellung eines Kraftfahrzeugs ferner eine Sensoreinrichtung umfasst, die ausgebildet ist, eine Verschwenkstellung des Lenkrads zu bestimmen, und eine Überwachungseinrichtung umfasst, die ausgebildet ist, zu bestimmen, ob die bestimmte Verschwenkstellung des Lenkrads in einem vorbestimmten Verschwenkbereich liegt, und einen Hinweis auszugeben, falls die bestimmte Verschwenkstellung nicht in dem vorbestimmten Verschwenkbereich liegt. Der vorbestimmte Bereich ist dabei vorzugsweise so festgelegt, dass eine sichere Airbag-Auslösung ermöglicht wird, falls die Lenkradstellung in dem vorbestimmten Bereich liegt.

Mit anderen Worten wird somit eine geeignete Sensorik bereitgestellt, die die Lenkradstellung überwacht und/oder erfassen kann und dem Fahrer mitteilt, z. B. über eine Textmeldung, die durch eine Anzeigevorrichtung anzeigbar ist, ob sich das Lenkrad im Hinblick auf die Airbag-Auslösung in einer geeigneten Stellung befindet, und/oder den Fahrer warnt, falls sich das Lenkrad im Hinblick auf die Airbag-Auslösung nicht in einer geeigneten Stellung befindet.

Auf diese Weise kann somit dem Fahrer ein sicherheitskritischer Hinweis gegeben werden, falls sich das Lenkrad im Hinblick auf die Airbag-Auslösung nicht in einer geeigneten Stellung befindet, so dass der Fahrer nicht unbewusst oder ohne es zu merken einen Fahrbetrieb mit einer Lenkradstellung ausführt, in der der Fahrer nicht optimal geschützt ist.

Das Lenkrad kann zwischen der ersten Stellung und der zweiten Stellung kontinuierlich verschwenkbar ausgeführt sein. Alternativ kann das Lenkrad zwischen der ersten Stellung und der zweiten Stellung auf mindestens eine, vorzugsweise mehrere diskrete Zwischenpositionen verstellbar sein.

Gemäß einer Ausführungsform kann der vorbestimmte Bereich nur Verschwenkstellungen des Lenkrads umfassen, in denen durch den ausgelösten Airbag eine Kraft auf den Fahrer ausgeübt wird, deren horizontal gerichtete Kraftkomponente größer als deren vertikal gerichtete Kraftkomponente ist. Alternativ oder zusätzlich kann der vorbestimmte Bereich nur Verschwenkstellungen des Lenkrads umfassen, in denen durch den ausgelösten Airbag eine Kraft auf den Fahrer ausgeübt wird, die den Fahrer in Richtung des Sitzes drückt und/oder in denen eine für einen Fahrer des Kraftfahrzeugs sichere Airbag-Auslösung möglich ist. Erfindungsgemäß umfasst der vorbestimmte Bereich nicht die erste Stellung.

Gemäß einer Ausführungsform kann der von der Überwachungseinrichtung ausgegebene Hinweis angeben, ob die bestimmte Verschwenkstellung in dem vorbestimmten Verschwenkbereich liegt oder nicht in dem vorbestimmten Verschwenkbereich liegt. Mit anderen Worten kann der von der Überwachungseinrichtung ausgegebene Hinweis so ausgebildet sein, dass der Fahrer hieraus ableiten kann, ob sich das Lenkrad in Bezug auf eine sichere Airbag-Auslösung in einer geeigneten Verschwenkstellung befindet oder nicht. Entsprechend wird der Fahrer durch den Hinweis darüber informiert, ob die aktuelle Lenkradstellung eine sichere Airbag-Auslösung ermöglicht oder nicht.

Beispielsweise kann der von der Überwachungseinrichtung ausgegebene Hinweis eine Textmeldung umfassen, die auf einer Anzeigefläche des Kraftfahrzeugs angezeigt wird. Die Anzeigefläche kann beispielsweise eine Anzeigefläche eines Kombiinstruments einer multifunktionalen digitalen Anzeige- oder Instrumententafel des Kraftfahrzeugs sein, z. B. ein Display, LCD- oder TFT-Bildschirm. Ein derartiger Hinweis ist für den Fahrer einfach zu verstehen.

Alternativ oder zusätzlich kann der von der Überwachungseinrichtung ausgegebene Hinweis durch Verwendung einer Warnleuchte ausgegeben werden, die so ausgeführt ist, dass sie leuchtet, falls die bestimmte Verschwenkstellung nicht in dem vorbestimmten Verschwenkbereich liegt, und die erlischt, falls die bestimmte Verschwenkstellung in dem vorbestimmten Verschwenkbereich liegt. Die Verwendung einer eigenen Warnleuchte kann eine besonders gute Signalwirkung erzeugen. Der Hinweis kann alternativ oder zusätzlich auch eine akustische Meldung oder einen akustischen Signalton umfassen, um die Signalwirkung weiter zu erhöhen.

Ferner kann die Sensoreinrichtung ausgebildet sein, die Verschwenkstellung des Lenkrads im gesamten Bereich zwischen der ersten und zweiten Stellung zu bestimmen. Auf diese Weise kann für jede mögliche Verschwenkstellung des Lenkrads bestimmt werden, ob hierfür eine sichere Airbag-Auslösung möglich ist.

Ferner kann die Überwachungseinrichtung ausgebildet sein, den Hinweis, dass die bestimmte Verschwenkstellung nicht in dem vorbestimmten Verschwenkbereich liegt, nur bei Vorliegen einer vorbestimmten Betriebssituation auszugeben, wobei die vorbestimmte Betriebssituation einen Fahrbetrieb, eine Aufnahme des Fahrbetriebs und/oder ein Überschreiten einer Mindestfahrgeschwindigkeit des Kraftfahrzeugs umfasst. Dies bietet den Vorzug, dass der Fahrer bei Pausen bzw. im Nicht-Fahrbetrieb nicht unnötig auf die im Hinblick auf die Airbag-Auslösung unsichere Lenkradstellung hingewiesen wird.

Gemäß einer besonders bevorzugten Ausführungsform kann die Vorrichtung zur Überwachung einer Lenkradstellung eines Kraftfahrzeugs ferner eine Lenkradverstelleinrichtung umfassen, die zur beispielsweise elektromotorischen Einstellung der Lenkradstellung zwischen der ersten Stellung und der zweiten Stellung ausgebildet ist. Dies bietet den Vorzug, dass die Lenkradstellung einfach und schnell angepasst werden kann. Die Lenkradverstelleinrichtung kann vorzugsweise eine Bedieneinrichtung umfassen, um die motorische Einstellung der Lenkradstellung manuell zu steuern. Die Bedieneinrichtung kann lediglich beispielhaft einen Schalter oder Taster zur Steuerung der Lenkradstellung umfassen. Der Schalter oder Taster kann auch als sog. Soft-Key, d. h. als virtueller oder digitaler Schalter ausgeführt sein, der auf einer digitalen Anzeige anzeigbar und betätigbar oder auswählbar ist.

Gemäß einer weiteren Variante kann die Überwachungseinrichtung ausgebildet sein, während der manuellen Einstellung der Lenkradstellung durch eine Bedienperson (z. B. Fahrer), z. B durch Betätigung der Lenkradverstelleinrichtung, den Hinweis auszugeben, ob die Verschwenkstellung des Lenkrads in dem vorbestimmten Verschwenkbereich liegt oder nicht. Auf diese Weise erhält die Bedienperson bei der Verstellung des Lenkrads unmittelbar eine Rückmeldung, ob die Lenkradstellung in dem für die Airbag-Auslösung sicheren Bereich liegt oder nicht, und kann auf diese Weise bediensicher die gewünschte Lenkradstellung einstellen.

Die Vorrichtung zur Überwachung einer Lenkradstellung eines Kraftfahrzeugs umfasst ferner eine Fahrererfassungseinrichtung, die ausgebildet ist, eine Fahrerstatur und/oder Fahrersitzposition zu bestimmen. Die Fahrererfassungseinrichtung kann dabei beispielsweise als Kamera oder optischer Sensor ausgebildet sein. Die Fahrerstatur kann beispielsweise die Sitzhöhe und/oder die Kopfhöhe des Fahrers umfassen.

Eine vorteilhafte Variante dieser Ausführungsform sieht vor, dass der vorbestimmte Verschwenkbereich in Abhängigkeit von der bestimmten Fahrerstatur und/oder Fahrersitzposition festgelegt wird. Die für eine sichere Lenkrad-Airbag-Auslösung optimale Verschwenkstellung des Lenkrads kann auch von der Größe des Fahrers abhängen. Entsprechend bietet diese Variante den besonderen Vorzug, dass der vorbestimmte Verschwenkbereich und damit die optimale Verschwenkstellung des Lenkrads an die aktuelle Fahrerstatur und/oder Fahrersitzposition angepasst werden kann.

Ferner besteht die Möglichkeit, dass die Lenkradstellung automatisch mittels der Lenkradverstelleinrichtung und in Abhängigkeit von der bestimmten Fahrerstatur und/oder Fahrersitzposition auf eine Verschwenkstellung in dem vorbestimmten Verschwenkbereich eingestellt werden kann. Die automatische Einstellung der Lenkradverstellung kann z. B. erfolgen, wenn die Verstellung durch Betätigung des Bedienelements aktiviert wird.

Alternativ oder zusätzlich kann die automatische Einstellung der Lenkradstellung nur bei Vorliegen einer vorbestimmten Betriebssituation durchgeführt werden, wobei die vorbestimmte Betriebssituation einen Fahrbetrieb, eine Aufnahme des Fahrbetriebs und/oder ein Überschreiten einer Mindestfahrgeschwindigkeit des Kraftfahrzeugs umfasst.

Die Erfindung betrifft ferner ein Kraftfahrzeug umfassend eine Vorrichtung zur Überwachung einer Lenkradstellung eines Kraftfahrzeugs wie in diesem Dokument beschrieben. Das Kraftfahrzeug kann ein Nutzfahrzeug sein, beispielsweise ein Lastkraftwagen oder Omnibus.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung der Vorrichtung gemäß einer Ausführungsform der Erfindung; und
- Figur 2: eine stark schematisierte Darstellung verschiedener Lenkradstellungen der Vorrichtung.

Gleiche oder äquivalente Elemente sind in allen Figuren mit denselben Bezugszeichen bezeichnet und zum Teil nicht gesondert beschrieben.

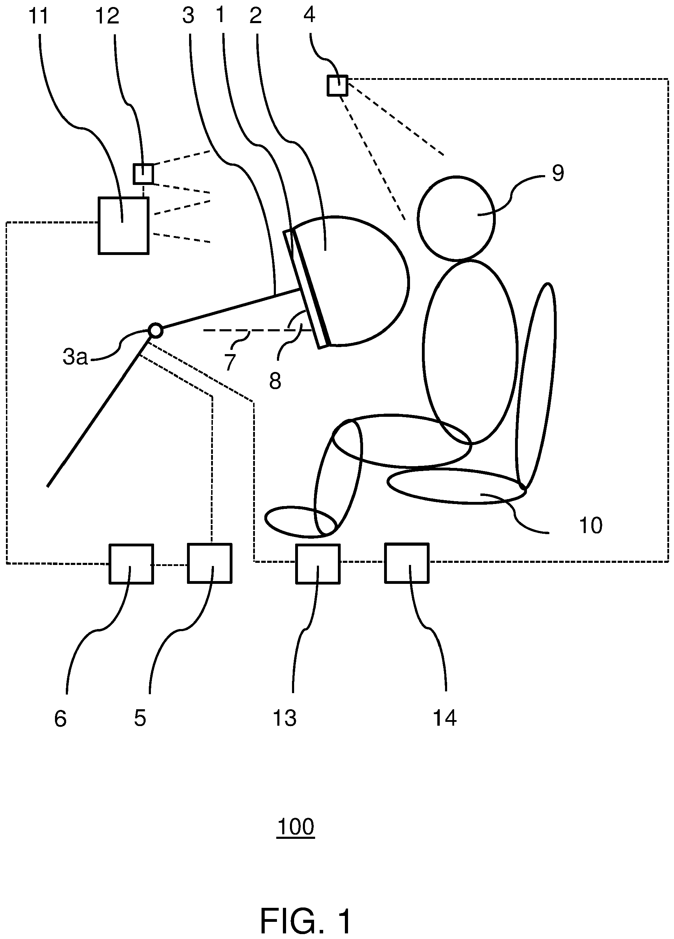

Figur 1 zeigt eine schematische Darstellung der Vorrichtung 100 zur Überwachung einer Lenkradstellung eines Kraftfahrzeugs gemäß einer Ausführungsform der Erfindung.

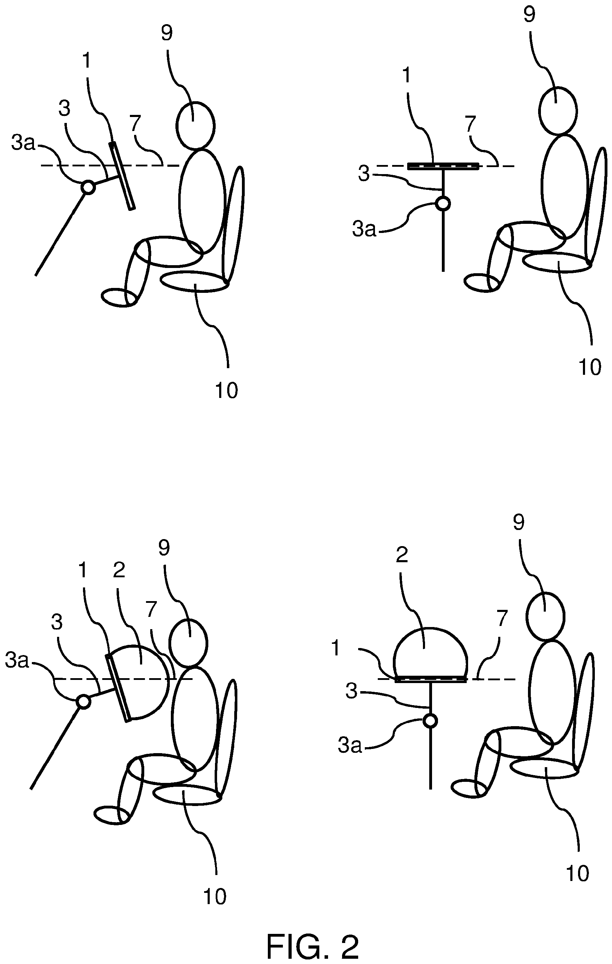

Die Vorrichtung 100 umfasst ein Lenkrad 1 mit integriertem Airbag 2, das an einer Lenksäule 3 befestigt ist. In Fig. 1 ist der Airbag 2 im ausgelösten Zustand gezeigt. An der Lenksäule 3 befindet sich ein, z. B. als Kardangelenk oder Kreuzgelenk ausgeführtes, Gelenk 3a. Das Lenkrad 1 ist gegenüber einer (nicht dargestellten) horizontalen Achse zwischen einer ersten Stellung oder einer zweiten Stellung verschwenkbar, welche nachfolgend, teilweise unter Bezugnahme auf Fig. 2, beschrieben werden. In der Darstellung der Fig. 1 befindet sich das Lenkrad in der ersten Verschwenkstellung.

Fig. 2 dient dabei lediglich der Verdeutlichung der genannten ersten und zweiten Stellung des Lenkrads 1.

In der ersten Stellung des Lenkrads 1 kann das Lenkrad beispielsweise in eine Horizontalstellung verschwenkt sein, wie in Figur 2 oben recht dargestellt. Diese Lenkradstellung erleichtert im nicht-ausgelösten Zustand des Airbags 2 dem Fahrer 9 das Ein- und Aussteigen oder kann als Schreibunterlage dienen und ist insofern vorzugsweise für Pausen bzw. für den Stillstand des Kraftfahrzeugs gedacht ist (siehe Fig. 2 oben rechts). Grundsätzlich ist im gezeigten Ausführungsbeispiel ein Fahrbetrieb allerdings sowohl in der ersten Stellung als auch in der nachfolgend beschriebenen zweiten Stellung des Lenkrads 1 möglich. Löst der Airbag 2 im gezeigten Ausführungsbeispiel in der ersten Stellung des Lenkrads 1 aus (siehe Fig. 2 unten rechts), wird auf den Fahrer 9 durch den ausgelösten Airbag 2 eine Kraft ausgeübt, deren vertikal gerichtete Kraftkomponente größer ist als deren horizontal gerichtete Kraftkomponente. Der Fahrer 9 kann einen "Kinnhaken" durch den Airbag 2 und Verletzungen erleiden. Bezüglich einer Aufnahme kinetischer Energie des Fahrers durch den Airbag 2 ist die erste Stellung gegenüber der unten beschriebenen zweiten Stellung nachteilhaft.

Von der ersten Stellung kann das Lenkrad 1 durch Verschwenken bis in eine zweite Stellung verschwenkt werden. Das Verschwenken des Lenkrads 1 findet dabei um das Gelenk 3a der Lenksäule 3 statt. In anderen Worten kann das Lenkrad 1 im Gelenk 3a der Lenksäule 3 um eine Achse verschwenkt werden, die normal zur Zeichenebene der Fig. 1 und Fig. 2 steht.

In der zweiten Stellung des Lenkrads 1 schließt das Lenkrad 1 mit der Horizontalebene 7 einen Winkel 8 von größer 30, beispielsweise größer 60 Grad ein. Das Lenkrad 1 weist in der Folge eine relativ senkrechte, dem Fahrer 9 zugewandte Stellung auf. Fig. 2 (oben links) zeigt die zweite Stellung des Lenkrads 1 im nicht-ausgelösten Zustand des Airbags 2. Im ausgelösten Zustand des Airbags 2 (siehe Fig. 2 unten links) wird im gezeigten Ausführungsbeispiel in der zweiten Stellung des Lenkrads 1 zudem erreicht, dass durch den ausgelösten Airbag 2 eine Kraft auf den Fahrer 9 ausgeübt wird, deren horizontal gerichtete Kraftkomponente größer als deren vertikal gerichtete Kraftkomponente ist. Die horizontale Kraftkomponente drückt den Fahrer 9 in Richtung des Sitzes 10. Bezüglich einer Aufnahme kinetischer Energie des Fahrers 9 durch den Airbag 2 ist die zweite Stellung insofern optimal. Im Fahrbetrieb bietet die zweite Stellung insofern optimalen Personenschutz.

Wie in Fig. 1 schematisch dargestellt, umfasst die Vorrichtung 100 ferner eine, z. B. als potentiometrischen Winkelsensor ausgeführte Sensoreinrichtung 5, die ausgebildet ist, die Verschwenkstellung des Lenkrads 1 zu bestimmen. Die erfasste Verschwenkstellung des Lenkrads 1 wird an eine Überwachungseinrichtung 6 übermittelt. Die Überwachungseinrichtung 6 ist z. B als in den CAN-Bus des Kraftfahrzeugs integriertes multifunktionales Steuergerät ausgeführt und ausgebildet, zu bestimmen, ob diese Verschwenkstellung in einem vorbestimmten Verschwenkbereich liegt. Der vorbestimmte Verschwenkbereich ist so festgelegt, dass dieser zumindest die zweite Lenkradstellung umfasst und die erste Lenkradstellung nicht umfasst und beispielsweise weitere Lenkradverschwenkstellungen umfasst, in denen das Lenkrad eine für die Airbag-Auslösung sichere Verschwenkstellung aufweist, beispielsweise wenn das Lenkrad 1 mit der Horizontalebene 7 einen Winkel 8 von größer 45 Grad einschließt.

Falls die durch die Sensoreinrichtung 5 bestimmte Verschwenkstellung nicht in einem vorbestimmten Verschwenkbereich liegt, ist die Überwachungseinrichtung 6 ausgebildet, einen Hinweis auszugeben. In diesem Fall sendet die Überwachungseinrichtung 6 in der gezeigten Ausführungsform einen Hinweis, z. B. in Form eines über eine elektrische Leitung übertragenen elektrischen Signals, an die z. B. als LCD oder TFT-Bildschirm ausgeführte Anzeigefläche 11, die sich in der Instrumententafel des Kraftfahrzeugs befindet. Auf der Anzeigefläche 11 löst das elektrische Signal eine an den Fahrer 9 gerichtete Textmeldung in Form eines Warnhinweises aus, aus dem der Fahrer 9 ableiten kann, dass sich das Lenkrad 1 nicht in einer für eine sichere Airbag-Auslösung geeigneten Verschwenkstellung befindet. Zusätzlich kann der Hinweis im gezeigten Ausführungsbeispiel optional in Form einer aufleuchtenden Warnleuchte 12 und/oder in Form eines akustischen Signaltons an den Fahrer 9 ausgegeben werden.

Befindet sich das Lenkrad 1 demgegenüber im gezeigten Ausführungsbeispiel in der zweiten Stellung, gezeigt in Figur 2 oben links, so erhält der Fahrer 9 eine andere Textmeldung, aus der der Fahrer 9 ableiten kann, dass sich das Lenkrad 9 in einer für eine sichere Airbag-Auslösung geeigneten Stellung befindet.

Die Vorrichtung 100 umfasst in der gezeigten Ausführungsform ferner eine Lenkradverstelleinrichtung 13. Diese ist über entsprechende Aktuatoren, beispielsweise über einen Spindelantrieb, zur elektromotorischen Einstellung der Lenkradstellung zwischen der ersten Stellung und der zweiten Stellung des Lenkrads 1 ausgebildet. Die Lenkradverstelleinrichtung 13 umfasst eine, beispielsweise als Schalter ausgebildete, Bedieneinrichtung 14, über deren Betätigung der Fahrer 9 die motorische Einstellung der Lenkradstellung manuell steuern bzw. auslösen kann. Betätigt der Fahrer 9 die Bedieneinrichtung 14 manuell, z. B durch Drücken des Schalters, verfährt die Lenkradverstelleinrichtung 13 im gezeigten Ausführungsbeispiel das Lenkrad 1 in Abhängigkeit von der jeweils aktuell vorliegenden Lenkradstellung von der ersten Stellung in die zweite Stellung oder von der zweiten Stellung in die erste Stellung. Ferner sind auch Zwischenstellungen zwischen der ersten und zweiten Stellung einstellbar.

Die Vorrichtung 100 umfasst ferner eine Fahrererfassungseinrichtung 4, die die Fahrerstatur des Fahrers 9 und/oder die Fahrersitzposition auf dem Fahrersitz 10 bestimmt. Die Fahrererfassungseinrichtung 4 kann z. B. als Kamera, Infrarot- oder CCD-Sensor ausgeführt sein. Die Fahrererfassungseinrichtung 4 erfasst im gezeigten Ausführungsbeispiel die Fahrerstatur des Fahrers, beispielsweise dessen Kopfposition oder durch Bestimmung der Scheitel-Steiß-Länge.

In der Überwachungseinrichtung 6 können zuvor unterschiedliche vorbestimmte Verschwenkbereiche hinterlegt sein, die jeweils unterschiedlichen Fahrerstaturen bzw. -größen und/oder Fahrersitzpositionen zugeordnet sind. Hierbei kann beispielsweise vorab mittels Crashtest-Dummys experimentell bestimmt werden, welche Lenkradstellungen für welche Fahrerstaturen bzw. -größen noch eine sichere Airbag-Auslösung ermöglichen, d. h. z. B. eine möglichst hohe Absorbtionswirkung des Airbags 2 und entsprechend unterschiedliche vorbestimmte Verschwenkbereiche festgelegt werden, die jeweils unterschiedlichen Fahrerstaturen bzw. -größen und/oder Fahrersitzpositionen zugeordnet sind.

In Abhängigkeit von den erfassten Daten (erfasste Fahrerstatur und/oder Fahrersitzposition auf dem Fahrersitz 10) wird dann der hierfür in der Überwachungseinrichtung 6 hinterlegte vorbestimmte Verschwenkbereich ermittelt und geprüft, ob die aktuelle Lenkradstellung innerhalb dieses vorbestimmten Verschwenkbereichs liegt oder nicht.

Ist dies nicht der Fall, kann in einer nicht beanspruchten Ausführungsform anstatt des Ausgebens eines Warnhinweises und einer manuellen durch den Fahrer ausgelösten Lenkradverstellung mittels der Lenkradverstelleinrichtung 13 auch eine automatische elektromotorische Verstellung mittels der Lenkradverstelleinrichtung 13 erfolgen, um ohne Zutun des Fahrers eine Lenkradverschwenkstellung einzustellen, die innerhalb des vorbestimmten sicheren Bereichs liegt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Lenkrad
- 2: Airbag
- 3: Lenksäule
- 4: Fahrererfassungseinrichtung
- 5: Sensoreinrichtung
- 6: Überwachungseinrichtung
- 7: Horizontalebene
- 8: Winkel
- 9: Fahrer
- 10: Sitz
- 11: Anzeigefläche
- 12: Warnleuchte
- 13: Lenkradverstelleinrichtung
- 14: Bedieneinrichtung
- 100: Vorrichtung

## Patentansprüche

1. Vorrichtung (100) zur Überwachung einer Lenkradstellung eines Kraftfahrzeugs, vorzugsweise Nutzfahrzeugs, umfassend
ein Lenkrad (1) mit integriertem Airbag (2), das um eine zu einer Lenksäule (3) des Lenkrads (1) senkrechte Achse zwischen einer ersten Stellung und einer zweiten Stellung verschwenkbar ist, wobei das Lenkrad (1) in der ersten Stellung eine im Vergleich zur zweiten Stellung horizontalere Ausrichtung aufweist;
eine Sensoreinrichtung (5), die ausgebildet ist, eine Verschwenkstellung des Lenkrads (1) zu bestimmen, und
eine Überwachungseinrichtung (6), die ausgebildet ist, zu bestimmen, ob die bestimmte Verschwenkstellung des Lenkrads (1) in einem vorbestimmten Verschwenkbereich liegt, wobei
die Überwachungseinrichtung (6) ausgebildet ist, einen Hinweis auszugeben, falls die bestimmte Verschwenkstellung nicht in dem vorbestimmten Verschwenkbereich liegt,
das Lenkrad (1) in der ersten Stellung eine horizontale Ausrichtung oder eine Ausrichtung aufweist, in der das Lenkrad (1) mit einer Horizontalebene (7) einen Winkel (8) von kleiner 30 Grad, vorzugsweise kleiner 20 Grad, aufweist, und
der vorbestimmte Bereich nicht die erste Stellung umfasst, und
wobei die Vorrichtung (100) eine Fahrererfassungseinrichtung (4) umfasst, die ausgebildet ist, eine Fahrerstatur und/oder Fahrersitzposition zu bestimmen.

2. Vorrichtung (100) nach Anspruch 1, wobei der vorbestimmte Bereich nur Verschwenkstellungen umfasst, in denen durch den ausgelösten Airbag (2) eine Kraft auf den Fahrer (9) ausgeübt wird, deren horizontal gerichtete Kraftkomponente größer als deren vertikal gerichtete Kraftkomponente ist und/oder die den Fahrer (9) in Richtung des Sitzes (10) drückt und/oder in denen einen für einen Fahrer (9) des Kraftfahrzeugs sichere Airbag-Auslösung möglich ist.

3. Vorrichtung (100) nach einem der vorhergehenden Ansprüche, wobei der von der Überwachungseinrichtung (6) ausgegebene Hinweis
a) angibt, ob die bestimmte Verschwenkstellung in dem vorbestimmten Verschwenkbereich liegt oder nicht in dem vorbestimmten Verschwenkbereich liegt; und/oder
b) eine Textmeldung umfasst, die auf einer Anzeigefläche (11) des Kraftfahrzeugs, vorzugsweise auf einer Anzeigefläche (11) eines Kombiinstruments einer multifunktionalen digitale Anzeige- oder Instrumententafel des Kraftfahrzeugs, angezeigt wird und aus der ein Fahrer (9) ableiten kann, ob sich das Lenkrad (1) in Bezug auf eine sichere Airbag-Auslösung in einer geeigneten Verschwenkstellung befindet.

4. Vorrichtung (100) nach einem der vorhergehenden Ansprüche, wobei der von der Überwachungseinrichtung (6) ausgegebene Hinweis durch Verwendung einer Warnleuchte (12) ausgegeben wird, die leuchtet, falls die bestimmte Verschwenkstellung nicht in dem vorbestimmten Verschwenkbereich liegt, und die erlischt, falls die bestimmte Verschwenkstellung in dem vorbestimmten Verschwenkbereich liegt.

5. Vorrichtung (100) nach einem der vorhergehenden Ansprüche, wobei die Überwachungseinrichtung (6) ausgebildet ist, den Hinweis nur bei Vorliegen einer vorbestimmten Betriebssituation auszugeben, wobei die vorbestimmte Betriebssituation einen Fahrbetrieb, eine Aufnahme des Fahrbetriebs und/oder ein Überschreiten einer Mindestfahrgeschwindigkeit des Kraftfahrzeugs umfasst.

6. Vorrichtung (100) nach einem der vorhergehenden Ansprüche, aufweisend eine Lenkradverstelleinrichtung (13) zur motorischen Einstellung der Lenkradstellung zwischen der ersten Stellung und der zweiten Stellung, umfassend eine Bedieneinrichtung (14), um die motorische Einstellung der Lenkradstellung manuell zu steuern.

7. Vorrichtung (100) nach Anspruch 6, wobei die Überwachungseinrichtung (6) ausgebildet ist, während der manuellen Einstellung der Lenkradstellung einem Fahrer (9) den Hinweis auszugeben, ob die Verschwenkstellung des Lenkrads (1) in dem vorbestimmten Verschwenkbereich liegt oder nicht.

8. Vorrichtung (100) nach einem der vorhergehenden Ansprüche, wobei der vorbestimmte Verschwenkbereich in Abhängigkeit von der bestimmten Fahrerstatur und/oder Fahrersitzposition festgelegt wird.

9. Vorrichtung (100) nach den Ansprüchen 6 und 8, wobei die Lenkradstellung automatisch mittels der Lenkradverstelleinrichtung (13) und in Abhängigkeit von der bestimmten Fahrerstatur und/oder Fahrersitzposition auf eine Verschwenkstellung in dem vorbestimmten Verschwenkbereich eingestellt wird.

10. Vorrichtung (100) nach Anspruch 9, wobei die Vorrichtung (100) ausgebildet ist, die automatische Einstellung der Lenkradstellung nur bei Vorliegen einer vorbestimmten Betriebssituation durchzuführen, wobei die vorbestimmte Betriebssituation einen Fahrbetrieb, eine Aufnahme des Fahrbetriebs und/oder ein Überschreiten einer Mindestfahrgeschwindigkeit des Kraftfahrzeugs umfasst.

11. Vorrichtung (100) nach einem der vorhergehenden Ansprüche, wobei das Lenkrad (1) zwischen der ersten Stellung und der zweiten Stellung kontinuierlich verschwenkbar oder auf mehrere diskrete Zwischenpositionen verstellbar ist.

12. Vorrichtung (100) nach einem der vorhergehenden Ansprüche, wobei die Sensoreinrichtung (5) ausgebildet ist, die Verschwenkstellung des Lenkrads (1) im gesamten Bereich zwischen der ersten und zweiten Stellung zu bestimmen.

13. Kraftfahrzeug, vorzugsweise Nutzfahrzeug, wie beispielsweise ein Lastkraftwagen oder Omnibus, umfassend eine Vorrichtung (100) nach einem der vorhergehenden Ansprüche.

## Claims

1. Device (100) for monitoring a steering wheel position of a motor vehicle, preferably a commercial vehicle, comprising
a steering wheel (1) with integrated airbag (2) which can be pivoted about an axis perpendicular to a steering column (3) of the steering wheel (1) between a first position and a second position, the steering wheel (1) having a more horizontal orientation in the first position than in the second position;
a sensor device (5) which is configured to determine a pivoted position of the steering wheel (1), and
a monitoring device (6) which is configured to determine whether the particular pivoted position of the steering wheel (1) lies within a predetermined pivoting range, wherein
the monitoring device (6) is configured to output an indication if the determined pivoted position does not lie in the predetermined swivel range,
the steering wheel (1) in the first position has a horizontal alignment or an alignment in which the steering wheel (1) with a horizontal plane (7) has an angle (8) of less than 30 degrees, preferably less than 20 degrees, and
the predetermined range does not comprise the first position, and
wherein the device (100) comprises a driver detection device (4) configured to determine a driver's stature and/or driver's seat position.

2. Device (100) according to claim 1, wherein the predetermined range only comprises pivoted positions in which a force is exerted on the driver (9) by the triggered airbag (2), the horizontally directed force component of which is greater than the vertically directed force component thereof and/or which presses the driver (9) in the direction of the seat (10) and/or in which an airbag triggering which is safe for a driver (9) of the motor vehicle is possible.

3. Device (100) according to any one of the preceding claims, wherein the indication output by the monitoring device (6)
a) indicates whether the determined pivoted position is within the predetermined pivoted range or is not within the predetermined pivoted range; and/or
b) comprises a text message which is displayed on a display surface (11) of the motor vehicle, preferably on a display surface (11) of an instrument cluster of a multifunctional digital display or instrument panel of the motor vehicle, and from which a driver (9) can deduce whether the steering wheel (1) is in an appropriate pivoted position with respect to a safe airbag deployment.

4. A device (100) according to any one of the preceding claims, wherein the indication issued by the monitoring means (6) is issued by using a warning light (12) which lights up if the determined pivoting position is not within the predetermined pivoting range and which goes out if the determined pivoting position is within the predetermined pivoting range.

5. Device (100) according to one of the preceding claims, wherein the monitoring device (6) is configured to output the indication only in the presence of a predetermined operating situation, wherein the predetermined operating situation comprises a driving operation, a start of the driving operation and/or an exceeding of a minimum driving speed of the motor vehicle.

6. Device (100) according to any one of the preceding claims, comprising a steering wheel adjustment device (13) for motorised adjustment of the steering wheel position between the first position and the second position, and comprising an operating device (14) for manually controlling the motorised adjustment of the steering wheel position.

7. The device (100) according to claim 6, wherein the monitoring device (6) is configured to output an indication to a driver (9) during the manual adjustment of the steering wheel position as to whether or not the pivoted position of the steering wheel (1) is within the predetermined pivoting range.

8. Device (100) according to any one of the preceding claims, wherein the predetermined swivel range is determined in dependence on the determined driver stature and/or driver seat position.

9. Device (100) according to the claims 6 and 8, wherein the steering wheel position is automatically adjusted to a pivoted position in the predetermined pivoted range by means of the steering wheel adjustment device (13) and in dependence on the determined driver stature and/or driver seat position.

10. Device (100) according to claim 9, wherein the device (100) is designed to carry out the automatic adjustment of the steering wheel position only in the presence of a predetermined operating situation, wherein the predetermined operating situation comprises a driving operation, a start of the driving operation and/or an exceeding of a minimum driving speed of the motor vehicle.

11. Device (100) according to any one of the preceding claims, wherein the steering wheel (1) is continuously pivotable or adjustable to a plurality of discrete intermediate positions between the first position and the second position.

12. Device (100) according to one of the preceding claims, wherein the sensor device (5) is configured to determine the pivoted position of the steering wheel (1) in the entire range between the first and second position.

13. A motor vehicle, preferably a commercial vehicle such as a truck or bus, comprising a device (100) according to any one of the preceding claims.

## Revendications

1. Dispositif (100) de surveillance de la position du volant d'un véhicule automobile, de préférence d'un véhicule utilitaire, ledit dispositif comprenant
un volant (1) qui est pourvu d'un airbag intégré (2) et qui peut pivoter entre une première position et une deuxième position sur un axe perpendiculaire à une colonne de direction (3) du volant (1), le volant présentant dans la première position une orientation plus horizontale par rapport à la deuxième position ;
un module de détection (5) qui est conçu pour déterminer une position de pivotement du volant (1), et
un module de surveillance (6) qui est conçu pour déterminer si la position de pivotement déterminée du volant (1) est située dans une zone de pivotement prédéterminée,
le module de surveillance (6) étant conçu pour délivrer une information sur le fait que la position de pivotement déterminée n'est pas située dans la zone de pivotement prédéterminée,
le volant (1) présentant dans la première position une orientation horizontale ou une orientation dans laquelle le volant (1) fait un angle (8) inférieur à 30 degrés, de préférence inférieur à 20 degrés, avec un plan horizontal (7), et
la zone prédéterminée ne comprend pas la première position, et
le dispositif (100) comprenant un module de détection de conducteur (4) qui est conçu pour déterminer la stature du conducteur et/ou la position du siège du conducteur.

2. Dispositif (100) selon la revendication 1, la zone prédéterminée ne comprenant que des positions de pivotement dans lesquelles l'airbag (2) déployé exerce sur le conducteur (9) une force dont la composante dirigée horizontalement est supérieure à sa composante dirigée verticalement et/ou qui pousse le conducteur (9) en direction du siège (10) et/ou dans lesquelles un déploiement d'airbag sûr pour un conducteur (9) du véhicule automobile est possible.

3. Dispositif (100) selon l'une des revendications précédentes, l'information délivrée par le module de surveillance (6)
a) indiquant si la position de pivotement déterminée est située dans la zone de pivotement prédéterminée ou n'est pas située dans la zone de pivotement prédéterminée ; et/ou
b) comprenant un message textuel qui est affiché sur une surface d'affichage (11) du véhicule automobile, de préférence sur une surface d'affichage (11) d'un groupe d'instruments d'un tableau de bord numérique multifonctionnel du véhicule automobile et à partir duquel un conducteur (9) peut déduire si le volant (1) se trouve dans une position de pivotement appropriée en ce qui concerne un déploiement sûr de l'airbag.

4. Dispositif (100) selon l'une des revendications précédentes, l'information délivrée par le module de surveillance (6) est délivrée à l'aide d'un avertisseur lumineux (12) qui s'allume si la position de pivotement déterminée n'est pas située dans la zone de pivotement prédéterminée et qui s'éteint si la position de pivotement déterminée est située dans la zone de pivotement prédéterminée.

5. Dispositif (100) selon l'une des revendications précédentes, le module de surveillance (6) étant conçu pour délivrer l'information uniquement en présence d'une situation de fonctionnement prédéterminée,
la situation de fonctionnement prédéterminée comprenant un mode de conduite, la détection d'un mode de conduite et/ou le dépassement d'une vitesse de conduite minimale du véhicule automobile.

6. Dispositif (100) selon l'une des revendications précédentes, comportant un module de réglage de volant (13) destiné au réglage motorisé de la position du volant entre la première position et la deuxième position, comprenant un module de manœuvre (14) destiné à commander manuellement le réglage motorisé de la position du volant.

7. Dispositif (100) selon la revendication 6, le module de surveillance (6) étant conçu pour délivrer à un conducteur (9), lors du réglage manuel de la position du volant, une information indiquant si la position de pivotement du volant (1) est située ou non dans la zone de pivotement prédéterminée.

8. Dispositif (100) selon l'une des revendications précédentes, la zone de pivotement prédéterminée étant définie en fonction de la stature déterminée du conducteur et/ou de la position déterminée du siège du conducteur.

9. Dispositif (100) selon les revendications 6 et 8, la position du volant étant réglée automatiquement à une position de pivotement dans la zone de pivotement prédéterminée au moyen du module de réglage de volant (13) et en fonction de la stature déterminée du conducteur et/ou de la position déterminée du siège du conducteur.

10. Dispositif (100) selon la revendication 9, le dispositif (100) étant conçu pour effectuer le réglage automatique de la position du volant uniquement en présence d'une situation de fonctionnement prédéterminée, la situation de fonctionnement prédéterminée comprenant un mode de conduite, la détection du mode de conduite et/ou le dépassement d'une vitesse de conduite minimale du véhicule automobile.

11. Dispositif (100) selon l'une des revendications précédentes, le volant (1) pouvant être pivoté en continu entre la première position et la deuxième position ou pouvant être réglé à une pluralité de positions intermédiaires discrètes.

12. Dispositif (100) selon l'une des revendications précédentes, le module de détection (5) étant conçu pour déterminer la position de pivotement du volant (1) dans toute la zone située entre la première position et la deuxième position.

13. Véhicule automobile, de préférence véhicule utilitaire, tel qu'un camion ou un bus, comprenant un dispositif (100) selon l'une des revendications précédentes.
